# FASCICULE DE BREVET EUROPEEN

(11) **EP 0 573 342 B1**
(45) Date de publication et mention de la délivrance du brevet: **09.07.1997**
(21) Numéro de dépôt: 93401383.0
(22) Date de dépôt: 01.06.1993
(51) Int. Cl.: A01F 15/14, A01F 15/08

(54) **Presse à fourrage**
Ballenpresse für Futter
Fodder baler

(30) Priorité: 05.06.1992 FR 9206849
(43) Date de publication de la demande: 08.12.1993
(60) Demande divisionnaire: 96400858.5
(73) Titulaire: GREENLAND FRANCE SA., F-45803 Saint Jean de Braye (FR)
(72) Inventeur: Galant, Jean-Claude, F-45100 Orleans (FR)
(74) Mandataire: Hirsch, Marc-Roger

(56) Documents cités:
- EP-A- 0 340 397
- DE-C- 3 809 132
- FR-A- 2 368 881
- US-A- 4 522 120

## Description

La présente invention concerne les presses à fourrage, et plus particulièrement les presses à fourrage du type a grosses balles carrées.

Il existe de nombreux modèles de presses à fourrage, adaptées au ramassage et au conditionnement des pailles et des foins. Toutes ces presses présentent certains inconvénients et n'ont donc pas un fonctionnement totalement satisfaisant.

En particulier, les presses existantes présentent souvent des dispositifs d'une grande complexité mécanique et qui sont de ce fait sujets à s'user rapidement. Ces systèmes ne permettent pas non plus toujours d'éviter des pertes sensibles en matériau à presser.

Un exemple d'un tel inconvénient se rencontre sur les presses connues au niveau du système de commande de la longueur de la balle. Ces systèmes sont généralement constitués d'une pluralité d'organes mécaniques, qui comprennent typiquement un dispositif mécanique de mesure de la longueur de la balle, un dispositif de déclenchement du nouage, et une chaîne cinématique complexe entre ces deux dispositifs. Les systèmes sont généralement réglables à l'arrêt, hors fonctionnement de la machine, grâce à des molettes ou des écrous constituant une butée. Ces systèmes ne sont pas satisfaisants à plus d'un titre : la complexité de la chaîne cinématique entre le dispositif mécanique de mesure et le dispositif de déclenchement conduit à une imprécision certaine. En outre, cette chaîne est sujette à une usure importante, et doit de ce fait, être largement surdimensionnée. Enfin, le réglage reste une opération délicate, qu'il est impossible d'effectuer en cours de pressage. Un opérateur doit donc nécessairement interrompre son travail, et arrêter la machine pour changer les réglages, ce qui diminue la souplesse d'utilisation. En particulier, en fin de champ, il pourrait être utile de vider la presse en réalisant une balle plus réduite, ce qui est impossible. Ceci entraîne des pertes quasi-sytématiques.

EP-A-0 340 397 décrit une presse de ce type, pour le ramassage et le conditionnement de fourrage en vue de l'obtention d'une balle, qui comprend une chambre de compression du fourrage, dans laquelle le fourrage est pressé par le mouvement alternatif d'un piston, pour constituer une balle, un dispositif de liage de la balle avant son éjection, un dispositif mécanique de mesure de la longueur de la balle dans la chambre de compression, et un dispositif mécanique de déclenchement provocant le liage de ladite balle.

DE-C-38 09 132 décrit une presse pour le ramassage et le conditionnement de fourrage. Dans cette presse, il est clairement indiqué qu'il n'y a pas de dispositif de mesure de la longueur de la balle dans la chambre de compression, mais bien au contraire un dispositif de comptage du nombre de mouvements alternatifs du piston. Il est explicitement écrit dans ce document que les dispositifs de mesure de la longueur de la balle dans la chambre de compression ne donnent pas satisfaction et doivent donc être évités.

Le même problème de pertes de matériau se pose a d'autres endroits dans les machines connues, et en particulier à l'alimentation de la chambre de compression, dans laquelle se forment les bottes. En effet, dans les machines connues, la chambre de compression, pour des raisons de simplicité, est le plus souvent alimentée en matériau à presser par une ouverture située sur sa paroi inférieure. Lors de l'arrivée du matériau dans la chambre de compression, et avant qu'il ne soit comprimé par le piston de celle-ci, il risque d'être entraîné par son propre poids et de retomber dans le canal d'alimentation. De ce fait, les balles peuvent présenter des défauts d'homogénéité. De plus, le matériau qui retombe peut s'accumuler et conduire dans les cas les plus graves à des bourrages du canal d'alimentation de la chambre de compression, ce qui nécessite de nouveau un arrêt de la machine pour un débourrage manuel.

Dans toutes les machines de l'art antérieur se pose donc le problème des arrêts de travail pour le réglage ou le débourrage, qui diminuent de façon importante le rendement.

La présente invention a pour but de pallier ces inconvénients de l'art antérieur ; elle fournit une presse nouvelle et sûre.

Un des avantages de la présente invention est d'offrir des facilités de réglages supplémentaires, tout en diminuant les risques de pannes mécaniques.

Un autre des avantages de la présente invention est d'éviter des pertes de fourrage dans le cycle d'alimentation de la presse, qui conduit à des bottes peu homogènes.

L'invention a pour objet une presse selon la revendication 1. Des modes de réalisation avantageux sont donnés dans les revendications dépendantes.

Les avantages de la présente invention ressortiront mieux de la description qui suit, donnée à titre d'exemple en référence aux figures annexées, qui montrent :
- figure 1, une vue en coupe d'ensemble d'une machine selon l'invention;
- figure 2, une vue partielle d'un système de commande de la longueur des balles, dans une presse selon l'invention;
- figure 3, une vue partielle d'un système de contrôle de l'alimentation dans une presse selon l'invention;
- figure 4, une vue du piston de face de la presse selon l'invention.

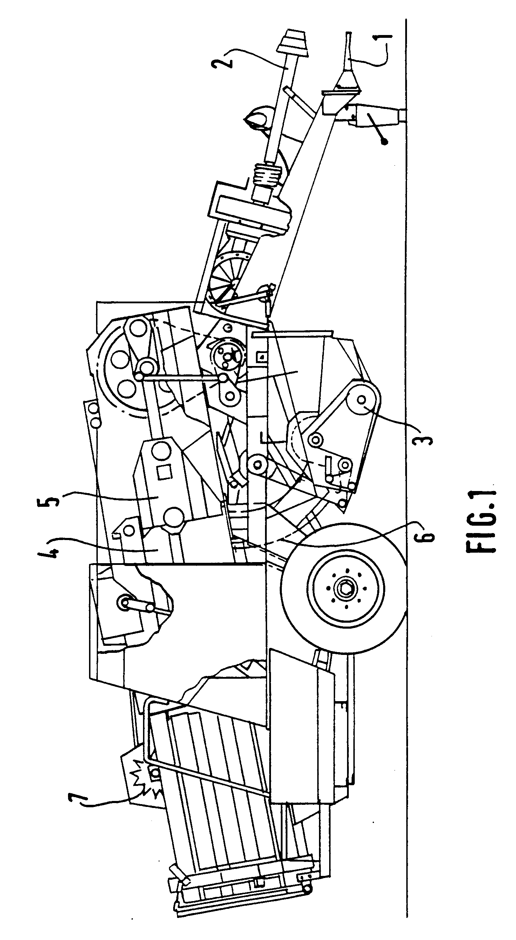

La presse selon l'invention, telle que représentée schématiquement à la figure 1, est utilisée pour le ramassage et le conditionnement du fourrage. Elle est tractée à cet effet par un véhicule du type tracteur agricole, muni d'un organe d'entraînement du type prise de force, susceptible de transmettre un couple à la presse selon l'invention. Celle-ci comprend un dispositif d'attelage 1 réglable, susceptible d'être fixé à la partie arrière d'un tracteur de type agricole, ainsi qu'un organe d'accouplement 2 grâce auquel la presse selon l'invention peut être accouplée à l'organe d'entraînement du tracteur.

La presse selon l'invention comprend un dispositif de ramassage 3 du fourrage du type appelé communément pick up, qui permet de ramasser du fourrage étalé sur le sol sous forme d'un andain. Sur la figure 1 qui représente la presse en position de transport, le dispositif de ramassage est relevé, mais sa position peut être réglée en fonction de la hauteur de l'attelage.

La presse comprend en outre une chambre de compression 4, dans laquelle le fourrage est pressé pour constituer une balle, par le mouvement alternatif d'un piston 5 qui se déplace dans la chambre et presse le matériau contre une paroi de fond amovible.

Un canal d'alimentation qui relie le dispositif de ramassage 3 et la chambre de compression alimente cette dernière en fourrage à partir du fourrage fourni par le dispositif de ramassage. On voit en pointillé sur la figure 1, le canal d'alimentation 6, qui débouche dans la paroi inférieure de la chambre de compression.

Enfin, la presse selon l'invention comprend un dispositif de liage de la balle avant son éjection. Le dispositif permet de lier la balle par une pluralité de fils, et comprend d'une part des noueurs réalisant des noeuds sur les fils, et d'autre part des aiguilles, chacune associée à un noueur, qui fait passer le fil de liage à travers les balles en cours de liage dans la chambre de compression, de façon à en faire le tour complet.

Dans la presse selon l'invention, le mouvement des aiguilles du piston est synchronisé pour permettre un liage de la balle sous la pression du piston, de façon à atteindre en sortie de machine, une pression importante, ce qui conduit à de nombreux avantages du point de vue du stockage. Grâce à la presse selon l'invention, on atteint dans des balles à grandes dimensions, des densités de fourrage importantes qui dépassent ce que permettent les dispositifs de l'art antérieur.

Le liage des balles est commandé grâce à un dispositif de mesure de la longueur de la balle, qui, dans le mode de réalisation de la figure 1, et constitué d'une roue dentée 7 entraînée en rotation du fait de la croissance de la balle dans la chambre de compression.

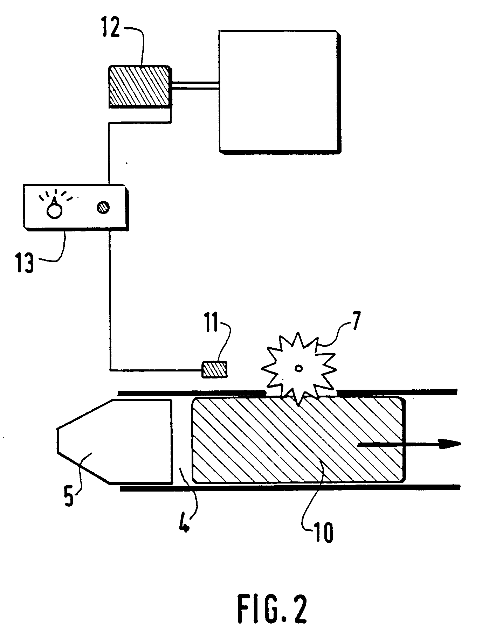

La figure 2 montre une vue partielle d'une presse selon l'invention, qui montre schématiquement un système de commande de la longueur des balles. Comme dans l'art antérieur, le système comprend un dispositif de mesure de la longueur des balles, qui peut être constitué, comme sur la figure 2, par une roue dentée 7 qui est entraînée en rotation par le déplacement de la balle 10 dans la chambre de compression 4. Selon l'invention, un capteur électronique 11 est associé à ce dispositif de mesure de la longueur de la balle 10, de façon à fournir un signal électrique représentatif de la longueur de la balle le capteur peut être quelconque, et peut par exemple être un capteur numérique, analogique ou autres.

Le système comprend en outre un dispositif de déclenchement 12, qui permet de déclencher le liage de la balle 10. Dans le mode de réalisation de la figure 2, le dispositif de déclenchement 12 commande le début du liage d'une balle, et il comprend une partie mécanique dont le mouvement libère le dispositif de liage, et une partie susceptible de recevoir un signal de commande et agissant sur la partie mécanique. Dans le mode de réalisation de la figure 1, cette partie est constituée d'un solénoïde qui, une fois excité, entraîne en mouvement la partie mécanique qui libère le dispositif de liage.

Le solénoïde peut être excité par un signal de commande provenant du capteur. L'invention peut aussi comprendre un boîtier 13 disposé à la portée de l'opérateur, qui reçoit le signal du capteur, et émet un signal de commande à destination du dispositif de déclenchement. Le boîtier permet d'une part à l'opérateur de déclencher à distance le liage de la balle, en envoyant au dispositif de déclenchement un signal de commande. Ce boîtier permet aussi à l'opérateur de régler à distance la longueur voulue de la balle, alors même que celle-ci est en cours de formation. En effet, le boîtier 13 reçoit du capteur un signal représentatif de la longueur de la balle. Ce signal est comparé à une valeur de consigne correspondant à la valeur fixée par l'opérateur, et le boîtier, lorsque cette valeur de consigne est atteinte, émet un signal de commande. Le boîtier est constitué d'éléments standard, tels que comparateurs, amplificateurs, et autres.

Le système de commande du liage selon l'invention permet un réglage précis de la longueur des balles et évite les inconvénients des chaînes cinématiques complexes de l'art antérieur. Il n'est plus sujet à des pannes mécaniques et ne nécessite plus de réglage précis. Grâce au boîtier, l'opérateur peut à tout moment déclencher le liage de la balle, même si elle n'a pas atteint une longueur standard. Cette possibilité est particulièrement intéressante dans la mesure où elle permet de lier une balle présente dans la presse après la fin d'un champ, ou pour toute intervention sur la machine, etc.. De la sorte, le fourrage présent dans la chambre de compression n'est pas perdu.

En outre, l'opérateur peut à tout moment changer par un geste simple la longueur de la balle, même en cours de travail. Il n'est plus nécessaire, grâce à l'invention d'arrêter tous les mécanismes pour un réglage compliqué. Ceci est particulièrement avantageux du point de vue de la sécurité du travail, car l'opérateur n'est plus tenté d'intervenir sur une machine en mouvement.

Selon l'invention, il est possible de prévoir un système de sécurité, provoquant automatiquement l'émission d'un signal de commande vers le dispositif de déclenchement dès que le capteur détecte une valeur maximale de la longueur de la balle. Ceci permet d'éviter d'endommager la machine. Il est en outre possible de prévoir une commande de déclenchement locale, grâce à laquelle un opérateur situé près de la machine peut envoyer un signal de commande au dispositif de déclenchement, et ainsi provoquer l'éjection d'une balle liée.

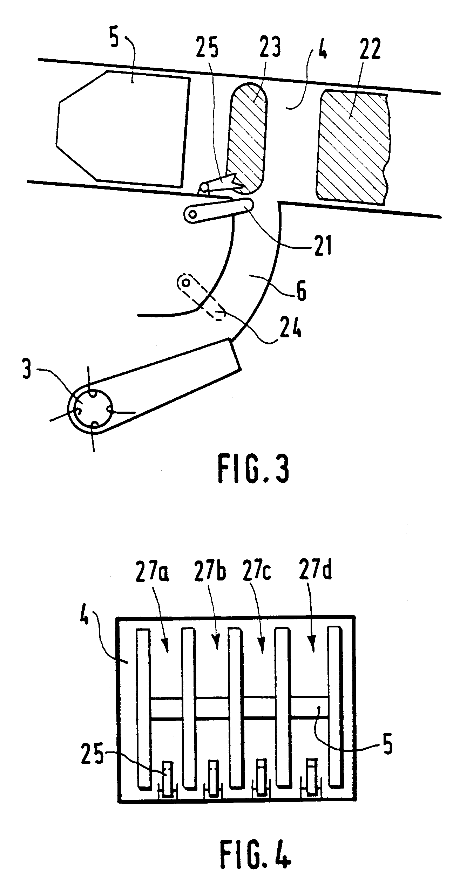

La figure 3 montre, dans la machine de la figure 1, une vue partielle schématique du contrôle de l'alimentation. Dans la presse selon l'invention, le fourrage ramassé par le dispositif de ramassage 3 s'accumule dans le canal d'alimentation 6, avant d'être transféré dans la chambre de compression 4 par le dispositif d'alimentation, dont on n'a représenté schématiquement que la partie terminale 21. On voit sur la figure 3 une balle 22 en cours de formation dans la chambre de compression. Le dispositif d'alimentation 21, lorsque le piston 5 découvre l'orifice du canal d'alimentation 6, alimente la chambre de compression de la quantité 23 de fourrage qui se trouvait dans le canal d'alimentation.

Comme le dispositif d'alimentation est animé d'un mouvement permanent entre une position extrême 21 et une position extrême 24, en début et en fin du canal d'alimentation, le fourrage 23 soulevé par le dispositif d'alimentation dans la chambre de compression 4 tend à retomber dans le canal d'alimentation, avant que le piston 5 n'avance et n'obstrue l'orifice de celui-ci. Grâce à la présence, selon l'invention, d'un système de dents escamotables, il est possible d'éviter ces types de pertes. En effet, on fixe à la paroi inférieure de la chambre de compression, au voisinage de l'orifice du canal d'alimentation, une pluralité de dents 25 mobiles librement autour d'un axe. Lors de l'alimentation du fourrage 23 depuis le canal d'alimentation dans la chambre de compression, les dents 25 sont relevées et prennent une position quasiment verticale, laissant passer le fourrage. Lorsque le dispositif 21 s'efface, le fourrage 23, sous l'effet de son poids, commence à descendre, et entraîne les dents 25, qui l'empêchent de revenir dans le canal d'alimentation.

Une fois que le piston 5 a comprimé la charge de fourrage 23, les dents 25 sont de nouveau relevées par l'alimentation d'une nouvelle charge de fourrage. Ainsi, ces dents limitent les pertes de fourrage et préviennent toute accumulation intempestive dans le canal d'alimentation.

La figure 4 représente une vue de face du piston et du système de dents 25 selon l'invention. Comme on peut le voir sur la figure 4, le piston 5 comprend une pluralité de passages verticaux 27a à 27d, qui permettent entre autres un passage des aiguilles de nouage dans la chambre de compression. Les dents 25 sont disposées dans ces passages, de façon à pouvoir se mouvoir librement quelle que soit la position du piston 5. De la sorte, les dents 25 peuvent empêcher toute descente de fourrage dans le canal d'alimentation, jusqu'à ce que le piston 5 ait pressé le fourrage et dégagé de nouveau l'orifice du canal d'alimentation.

Le fonctionnement des systèmes de dents selon l'invention est entièrement automatique, et ne nécessite aucune intervention de l'opérateur. Le système est simple et robuste, et peut être installé simplement, même sur des machines déjà existantes. Il est d'une utilité toute particulière pour les fourrages de densité élevée qui ont particulièrement tendance à retomber dans le canal d'alimentation.

## Revendications

1. Presse pour le ramassage et le conditionnement de fourrage en vue de l'obtention d'une balle, comprenant une chambre de compression du fourrage (4), dans laquelle le fourrage est pressé par le mouvement alternatif d'un piston pour constituer une balle, un dispositif de liage de la balle avant son éjection, un dispositif (7) de mesure de la longueur de la balle dans la chambre de compression, et un dispositif de déclenchement (12) provocant le liage de ladite balle, caractérisée en ce qu'elle comprend un capteur électronique (11) associé audit dispositif (7) de mesure, fournissant un signal représentatif de la longueur effective de la balle (10) dans la chambre de compression (4) et en ce que le dispositif de déclenchement (12) provoque le liage de ladite balle en réponse à un signal de commande fonction dudit signal représentatif de la longueur de la balle.

2. Presse selon la revendication 1, caractérisée en ce qu'elle comprend en outre un boitier (13) permettant d'émettre un signal de commande vers ledit dispositif de déclenchement (12), pour provoquer le liage de ladite balle.

3. Presse selon la revendication 2, caractérisée en ce que ledit boitier émet ledit signal de commande dès que le signal dudit capteur (11) dépasse une valeur de consigne représentative d'une longueur réglable sur ledit boitier.

4. Presse selon l'une des revendications 1 à 3, caractérisée en ce que ledit dispositif de déclenchement comprend une partie mécanique et un solénoïde sensible audit signal de commande et agissant sur ladite partie mécanique.

5. Presse selon l'une quelconque des revendications 1 à 4, caractérisée en ce qu'elle comprend en outre un dispositif de ramassage de fourrage (3), un canal d'alimentation (6) reliant ledit dispositif de ramassage (3) à ladite chambre de compression (4), et un dispositif empêchant le retour dans le canal d'alimentation (6) du fourrage passant depuis ce dernier dans la chambre de compression (4).

6. Presse selon la revendication 5, caractérisée en ce que ledit dispositif empêchant le retour du fourrage est constitué d'une pluralité de dents (25) disposées sur la paroi de la chambre de compression (4) adjacentes audit canal d'alimentation (6).

7. Presse selon la revendication 6, caractérisée en ce que lesdites dents (25) sont disposées dans des passages ménagés dans ledit piston (5) pour des aiguilles d'un dispositif de liage de la balle .

8. Presse selon la revendication 6 ou 7, caractérisée en ce que lesdites dents sont montées libres en rotation, pivotent lors du passage du fourrage et s'appuient sur la paroi de la chambre de compression pour empêcher le retour du fourrage dans le canal d'alimentation.

## Claims

1. Pickup fodder baler comprising a fodder compression chamber (4), in which the fodder is compressed by the alternating movement of a piston to constitute a bale, a device for tying the bale prior to ejection thereof, a device (7) for measuring the length of the bale inside the compression chamber, and a triggering device (12) initiating tying of the bale, characterized in that it comprises an electronic sensor (11) associated with said measuring device (7) supplying a signal representative of the length of said bale (10) in the compression chamber (4), and in that said triggering device (12) causes said bale to be tied in response to a control signal that is a function of said signal representative of the length of the bale.

2. Baler according to claim 1, characterized in that it further comprises a housed unit (13) enabling a control signal to be issued to said triggering device (12) for bringing about tying of said bale.

3. Baler according to claim 2, characterized in that said housed unit issues said control signal as soon as the signal from said sensor (11) exceeds a reference value representative of a length that can be adjusted on said housed unit.

4. Baler according to one of claims 1 to 3, characterized in that said triggering device comprises a mechanical portion and a solenoid responsive to said control signal and acting on said mechanical portion.

5. Baler according to one of claims 1 to 4, characterized in that it further comprises a fodder pickup device (3), a feed channel (6) linking said pickup device (3) to said compression chamber (4), and a device preventing fodder returning into the feed channel (6) during its passage therefrom into the compression chamber (4).

6. Baler according to claim 5, characterized in that said device preventing the return of fodder consists of a plurality of teeth (25) arranged on the wall of the compression chamber (4) adjacent to said feed channel (6).

7. Baler according to claim 6, characterized in that said teeth (25) are disposed in the passages provided in said piston (5) for said needles.

8. Baler according to claim 6 or 7, characterized in that said teeth are mounted freely in rotation, pivoting at the time of passage of said fodder and bearing against the wall of the compression chamber in order to prevent the return of fodder into the feed channel.

## Patentansprüche

1. Presse zum Aufnehmen und Packen von Futter zur Bildung eines Ballens, mit einer Futter-Verdichtungskammer (4), in der das Futter durch die alternierende Beugung eines Kolbens zu einem Ballen gepreßt wird, einer Einrichtung zum Binden des Ballens vor seinem Auswurf, einer Einrichtung (7) zum Messen der Länge des Ballens in der Verdichtungskammer und einer Auslöseeinrichtung (12), die das Binden des Ballens veranlaßt, dadurch gekennzeichnet, daß sie einen elektronischen Aufnehmer (11) aufweist, der der Meßeinrichtung (7) zugeordnet ist, die ein für die effektive Länge des Ballens (10) in der Verdichtungskammer (4) repräsentatives Signal liefert, und daß die Auslöseeinrichtung (12) das Binden des Ballens auf ein Steuersignal hin veranlaßt, das von dem für die Länge des Ballens repräsentativen Signal abhängig ist.

2. Presse nach Anspruch 1, dadurch gekennzeichnet, daß sie außerdem einen Schaltkasten (13) aufweist, der es gestattet, ein Steuersignal an die Auslöseeinrichtung (12) zu senden, um das Binden des Ballens zu veranlassen.

3. Presse nach Anspruch 2, dadurch gekennzeichnet, daß der Schaltkasten das Steuersignal sendet, sobald das Signal des Aufnehmers (11) einen Einstellwert übersteigt, der eine an dem Schaltkasten einstellbare Länge repräsentiert.

4. Presse nach einem der Ansprüche 1 bis 3, dadurch gekennzeichnet, daß die Auslöseeinrichtung einen mechanischen Teil und eine Spule aufweist, die auf das Steuersignal anspricht und auf den mechanischen Teil wirkt.

5. Presse nach einem der Ansprüche 1 bis 4, dadurch gekennzeichnet, daß sie außerdem eine Einrichtung (3) zum Aufnehmen des Futters, einen Zufuhrkanal (6), der diese Aufnahmeeinrichtung (3) mit der Verdichtungskammer (4) verbindet, und eine Einrichtung aufweist, die verhindert, daß das Futter, das über diese Einrichtung hinaus in die Verdichtungskammer (4) eingetreten ist, wieder in den Zufuhrkanal (6) zurückkehrt.

6. Presse nach Anspruch 5, dadurch gekennzeichnet, daß die genannte Einrichtung zur Verhinderung des Rückflusses des Futters durch mehrere Zähne (25) gebildet wird, die an der an den Zufuhrkanal (6) angrenzenden Wand der Verdichtungskammer (4) angeordnet sind.

7. Presse nach Anspruch 6, dadurch gekennzeichnet, daß die Zähne (25) in Kanälen angeordnet sind, die für die Nadeln einer Ballen-Bindeeinrichtung in dem Kolben (5) ausgebildet sind.

8. Presse nach Anspruch 6 oder 7, dadurch gekennzeichnet, daß die Zähne frei schwenkbar montiert sind, beim Durchgang des Futters ausschwenken und sich an die Wand der Verdichtungskammer anlegen, um den Rückstrom des Futters in den Zufuhrkanal zu verhindern.
